# EUROPEAN PATENT APPLICATION

(11) **EP 2 446 969 A1**
(43) Date of publication of application: **02.05.2012**
(21) Application number: 10792070.4
(22) Date of filing: 21.06.2010
(51) Int. Cl.: B02C 19/00, B02C 7/10, B02C 13/20, B09B 3/00

(54) **HOUSING DISASSEMBLING DEVICE AND DISASSEMBLING METHOD USING SAME**

(30) Priority: 22.06.2009 JP 2009147943
(71) Applicant: National Institute for Materials Science, Tsukuba-shi, Ibaraki 305-0047 (JP); Oshigane, Inc, Saitama 336-0025 (JP)
(72) Inventor: HARADA Kohmei, Tsukuba-shi Ibaraki 305-0047 (JP); KATAGIRI Nozomu, Tsukuba-shi Ibaraki 305-0047 (JP); IDE Kunikazu, Tsukuba-shi Ibaraki 305-0047 (JP); IJIMA Kiyoshi, Tsukuba-shi Ibaraki 305-0047 (JP); OSHIGANE Yoshio, Saitama-shi Saitama 336-0025 (JP)
(74) Representative: Manley, Nicholas Michael
(86) International application number: PCT/JP2010/060486
(87) International publication number: WO 2010/150752

(57) **Abstract**

[Problem to be Solved]

The present invention relates to rationalization of a disassembling operation of electronic devices before crushing the devices in order to achieve urban mines, and has an object to achieve mechanical disassembling without significantly destroying components containing many rare elements to be recovered.

[Solution]

In order to achieve the object, the invention 1 provides a casing disassembling apparatus including: a first rotor and a second rotor journaled on a rotating shaft, and having end surfaces perpendicular to the rotating shaft, wherein the end surfaces face each other, the rotors are placed so that the end surfaces are inclined to each other, a portion at which a space between the end surfaces is larger than at the other portion is an input port of an object to be disassembled, and the other portion is a portion at which a pressurizing force is applied to the input object to be disassembled, and from which a disassembled piece is ejected. The invention 2 provides the casing disassembling apparatus, wherein a plurality of protrusions are mounted to at least one of the end surfaces in the invention 1. The invention 3 provides the casing disassembling apparatus, wherein protrusions are provided on a periphery of one of the end surfaces at predetermined intervals corresponding to a size of the ejected disassembled piece in the invention 2. The invention 4 provides a disassembling method using a casing disassembling apparatus according to any one of the inventions 1 to 3, wherein a relative inclination angle and an inclination angle to the vertical of end surfaces are adjusted to set a space of an input port and a pressurizing force correspondingly to an object to be disassembled such as an electronic device. According to the present invention, a casing can be crushed without components containing rare metal being crushed to a level that the components cannot be recovered. Also, an electronic device can be mechanically disassembled so that the casing and the components can be disconnected from each other and can be separately recovered.

## Description

### Technical Field

The present invention relates to a casing disassembling apparatus and a disassembling method using the same, and more particularly to a disassembling method using an apparatus for disassembling a device including a semiconductor device such as a used electronic device, and separating parts used for recovering rare elements mainly contained in the semiconductor device or a circuit board thereof from a casing.

### Background Art

To achieve so-called urban mines and recovering and recycling rare elements as rare resources has significance for maintaining the global environment and maintaining and developing advanced present civilization. In particular, if semiconductor devices, display panels or circuit boards containing more rare metal can be separated from a casing part that contains no rare metal and recovered, it is highly likely that efficiency of urban mines is increased and efficiency higher than that in collection from natural mines can be achieved.

However, in recycling a used electronic device or the like, it is not easy to destroy and disassemble a casing part which is rigidly designed and produced for ensuring safety of consumers or reliability of a product, and a manual disassembling operation is currently required.

The main reason is that, if a conventional crushing technique is used intended to efficiently crush all input objects to be crushed as disclosed in Patent Literatures 1 to 5, a casing part and also parts containing many rare elements are also crushed, these parts cannot be easily separated, and the parts containing the rare elements may be crushed into too small pieces and cannot be recovered in some cases.

Since the crushing operation has reduced recovery efficiency of rare elements that is the final purpose, a manual disassembling operation has been required.

### Summary of Invention

### Technical Problem

In view of such circumstances, the present invention has an object to avoid crushing of parts containing many rare elements, and reduce or eliminate a manual disassembling operation of a casing part.

### Solution to Problem

The invention 1 provides a casing disassembling apparatus including: a first rotor and a second rotor journaled on a rotating shaft, and having end surfaces perpendicular to the rotating shaft, wherein the end surfaces face each other, the rotors are placed so that the end surfaces are inclined to each other, a portion at which a space between the end surfaces is larger than at the other portion is an input port of an object to be disassembled, and the other portion is a portion at which a pressurizing force is applied to the input object to be disassembled, and from which a disassembled piece is ejected.

The invention 2 provides the casing disassembling apparatus, wherein a plurality of protrusions are mounted to at least one of the end surfaces in the invention 1.

The invention 3 provides the casing disassembling apparatus, wherein protrusions are provided on a periphery of one of the end surfaces at predetermined intervals corresponding to a size of the ejected disassembled piece in the invention 2.

The invention 4 provides a disassembling method using a casing disassembling apparatus according to any one of the inventions 1 to 3, wherein a relative inclination angle and an inclination angle to the vertical of end surfaces are adjusted to set a space of an input port and a pressurizing force correspondingly to an object to be disassembled such as an electronic device.

### Advantageous Effects of Invention

In the casing disassembling apparatus of the invention 1, the object to be disassembled input between the relatively inclined end surfaces is destroyed by applying pressure to a casing thereof. Thus, a semiconductor substrate or the like housed in the casing is separated from the casing into small disassembled pieces. The disassembled pieces are ejected from the apparatus without more pressure being applied thereto.

Thus, a device such as a semiconductor substrate or a circuit can be disassembled without being crushed, and an object to be recovered such as the semiconductor substrate can be removed from the casing and recovered with the same yield as a conventional manual disassembling operation.

In the invention 2, appropriate protrusions are placed on the end surface. Thus, the protrusions protruding into the casing part by the pressurizing force function to separate the casing part when the casing passes through a portion with the smallest space, and thus the pressurizing force and also a tearing force are applied to the casing to allow the casing to be separated without damaging a substrate inside, and allow the casing to be more efficiently disassembled.

Further, according to the invention 3, pressurizing and tearing are repeatedly performed between the end surfaces until the casing is reduced in size to an appropriate size. Even a casing that cannot be disassembled in one cycle can be reliably disassembled into small pieces of a certain level or less without crushing a device such as a semiconductor substrate or a circuit.

According to the method of the invention 4, the above-described advantage can be achieved in the best state so as to adapt to a size of the object to be disassembled, strength of the casing, or arrangement of components to be recovered in the casing.

With this method, a casing part can be easily disassembled and separated from a substrate part, which has been difficult in recycling used home-use appliances such as a mobile phone, plastic, aluminum, or screws of the casing can be recycled as materials, and the substrate part as it is can be then subjected to recovery of valuable metal by melting in a smelting furnace or condensation of valuable components by other crushing/separation methods.

### Brief Description of Drawings

[Figure 1] Figure 1 is a fragmentary front view showing an embodiment of a casing disassembling apparatus.
[Figure 2] Figure 2 is a front view and a plan view showing a protrusion mounted to an end surface, (a) shows a truncated conical protrusion, (b) shows a conical protrusion, (c) shows a cubular protrusion, (d) shows a square pyramidal protrusion, (e) shows an inverted truncated conical protrusion, and (f) shows a hexagonal cylindrical protrusion.
[Figure 3] Figure 3 is a side view and a front view showing an end surface of a first rotor.
[Figure 4] Figure 4 is a side view and a front view showing an end surface of a second rotor.
[Figure 5] Figure 5 is a photograph of a disassembled object disassembled by a method according to an embodiment.
[Figure 6] Figure 6 is a photograph of the disassembled object disassembled by the method according to the embodiment.
[Figure 7] Figure 7 is a flowchart of an automatic control system of the embodiment.
[Figure 8] Figure 8 is fragmentary side view showing the disassembling apparatus in Figure 1.

### Reference Signs List

- (1): first rotor
- (2): second rotor
- (Ba): substrate
- (Ba1)(Ba2): support plate
- (Ca): camera
- (G1) (G2): movable substrate
- (H): conveyor
- (H1): motor
- (H2): conveyor belt
- (H3): end of conveyor
- (J1) (J2): hydraulic jack
- (M1) (M2): drive motor
- (P): hinge
- (P1) (P2): drive shaft
- (P1) (P2): frame
- (PC): computer
- (R10) (R20): rotary disk
- (R11) (R21): opposing surface (end surface)
- (W): cover
- (W1): input port of object to be disassembled
- (W2) (W3): front opening and rear opening in cover
- (W4): side opening in cover
- (a1) (b1) (c1) (d1) (e1) (f1): protrusion
- (a2) (b2) (c2) (d2) (e2) (f2): male thread on protrusion
- (a3) (b3) (c3) (e3): hole into which pin wrench is inserted
- (θ1) (θ2): inclination angle

### Description of Embodiments

From experience of a manual disassembling operation, it is known that for many electronic devices, disassembling a casing allows components such as a substrate housed therein to be easily separated into small components. The present invention uses this and performs mechanical disassembling to save a manual operation.

In particular, when material of a casing part has high strength and deformability, this characteristic is effectively used to apply a pressurizing force and also a "tearing" force to perform disassembling without applying an excessive pressure to components inside.

Thus, an electronic circuit board containing various kinds of rare metal is torn off in the form of a substrate from the casing part without falling of a semiconductor chip or a gold-plated component, and only the electronic circuit board part can be intensively recycled in a next step.

This process replaces "manual disassembling" that only can intentionally take out an electronic circuit board as a primary disassembling process, and can significantly reduce recycling costs for manual disassembling and promote recycling.

Also, for torn casing materials, metal and plastic are separately torn off from the relationship between the tearing force and strength of the materials, and thus the materials can be easily separated and recycled.

In the embodiment, a mobile phone is used. However, the present invention may be applied to any size by adjusting a space between end surfaces or a size, and may be basically applied to products using a relatively strong casing as a shell.

For example, for a small object such as an AC adaptor, reducing a space between end surfaces and increasing power of a motor allows high-strength plastic of a casing to be disassembled and allows copper wires or the like to be taken out.

For a personal computer or a DVD player, it can be easily imagined that an operation with an increased space between end surfaces allows disassembling (which refers to destroying a casing and disassembling into components. Hereinafter the same). Further, a secondary component such as a hard disk may be reprocessed and disassembled.

### Embodiment 1

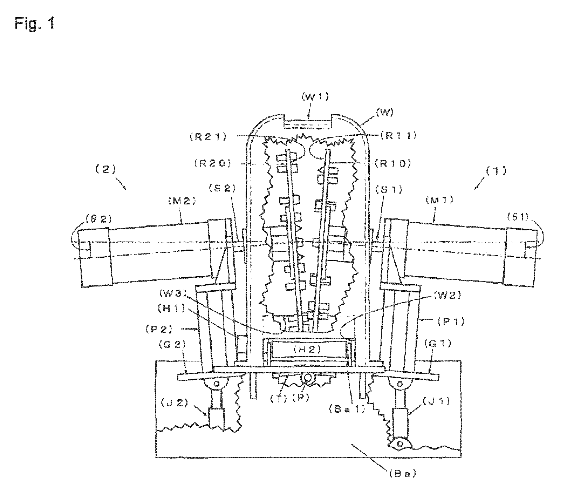

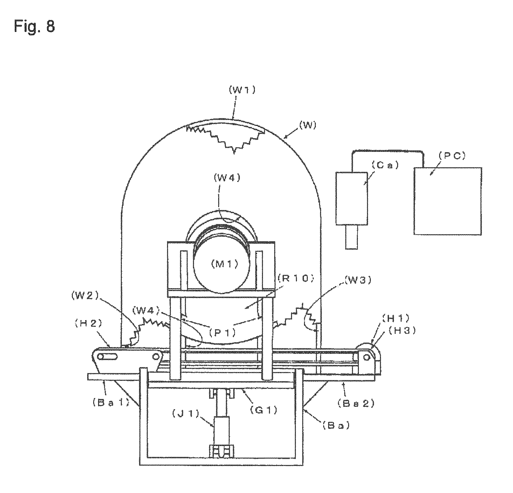

With reference to Figures 1 to 4 and 8, an embodiment of a casing disassembling apparatus will be described.

A first rotor (1) and a second rotor (2) each include drive motors (M1) and (M2), rotary disks (R10) and (R20) secured to drive shafts (P1) and (P2) of the motors, movable substrates (G1) and (G2) that support the motors via frames (P1) and (P2), a hinge (P) that connects one end of each of the movable substrates (G1) and (G2), hydraulic jacks (J1) and (J2) that vertically swing the movable substrates (G1) and (G2) around the hinge (P) to adjust angles (θ1) and (θ2).

A shaft of the hinge (P) and lower ends of the hydraulic jacks (J1) and (J2) are secured to a substrate (Ba), and the substrate (Ba) is a starting point of the angles (θ1) and (θ2).

As such, opposing surfaces (end surfaces) (R11) and (R21) of the rotary disks (R10) and (R20) are placed to face each other, and a relative inclination angle (θ1)+(θ2) can be adjusted by the hydraulic jacks (J1) and (J2).

(W) denotes a cover that covers outer peripheries of the disks (R10) and (R20) of the rotors (1) and (2) An input port (M1) for an object to be disassembled is provided in an upper portion, and openings (W2) and (W3) through which a conveyor (H) for conveying a disassembled piece is passed are provided in a lower portion. Openings (W4) through which the motors (M1) and (M2) are placed outside are provided in opposite side surfaces. With the openings (W4), side walls are brought as close as possible to the rotary disks (R10) and (R20) and receive and bounce an unassembled object flying out from between the disks.

The conveyor (H) mainly includes a motor (H1) and a conveyor belt (H2), and the endless conveyor belt (H2) is extended by a roller that moves the conveyor belt (H2) using the motor (H1) and an idling roller. The roller and the motor are held on support plates (Ba1) and (Ba2) secured to the substrate (Ba).

As such, disassembled pieces of the object to be disassembled input from the input port (W) and disassembled between the disks (R10) and (R20) fall on the conveyor (H) and are ejected outside the apparatus from an end (H3) of the conveyor.

The rotary disks (R10) and (R20) have many screw holes (H) passing therethrough along a thickness thereof.

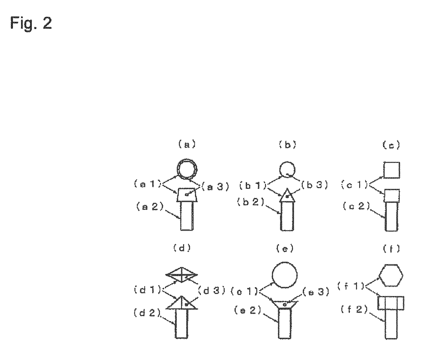

Protrusions (a1), (b1), (c1), (d1), (e1) and (f1) shown in Figure 2 are selectively mounted in the screw holes (H), and the protrusions integrally have male threads (a2), (b2), (c2), (d2), (e2) and (f2) for mounting.

For the circular protrusions (a11) (b1), (c1) and (e1), a general fastening tool such as a wrench or a spanner cannot be used, and thus the protrusions have holes (a3), (b3), (c3) and (e3) through which a pin wrench is inserted.

As such, the object to be disassembled can be disassembled with a tearing force being applied appropriately according to a size of a casing, strength thereof, and placement or size of components.

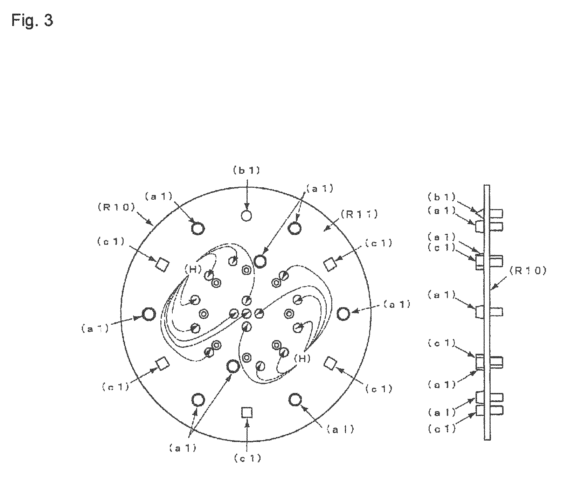

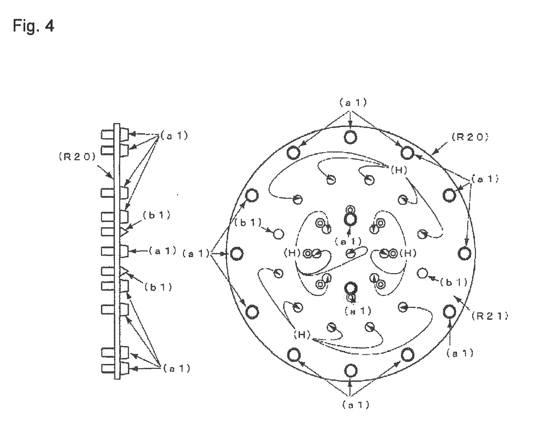

Figures 3 and 4 show an example with such a protrusion.

As shown in Figure 4, the protrusions (a1) are arranged at regular intervals near an outer periphery of an end surface (R21) of the disk (R20) of the second rotor (2). This prevents the object to be disassembled from falling off without being disassembled, and the intervals between the protrusions allow only small pieces disassembled to a certain level to fall.

Also, changing a relative rotational speed of the rotors (1) and (2) can apply unit pressure and also a tearing force, thereby allowing the casing to be disassembled without applying excessive pressure to components inside.

If it is set that an object having a thickness of a circuit board falls through a narrowest portion (lower portion) of the space between the end surfaces (R11) and (R21), and an object larger than that cannot easily fall therethrough, the circuit board can be taken out substantially in its entire original form.

The protrusions (a1), (b1), (c1) (d1) (e1) and (f1) and the rotary disks (R10) and (R20) may be made of any of metal, ceramic, composite material, and high-strength polymer material or a combination thereof as long as the material has higher deformation strength than tension strength of the casing to be disassembled. Shapes of protrusions (a1), (b1), (c1), (d1) (e1) and (f1)

A cylindrical or barrel shaped protrusion with a rounded end has high strength and is very versatile. However, for a casing material with relatively high deformability, a conical protrusion with a sharp tip can easily secure a soft material. The protrusion (e1) with a smaller diameter at a body than at a tip is expected to more reliably secure a protruding object in a large casing or the like. For a casing product mainly made of hard substance, a spear shaped protrusion is effective such as protrusions (b1) and (d1) with a sharp tip and an expanded body.

The protrusion may have a cross section of a circular shape and also polygonal shapes (f1) and (c1), and a tearing effect can be adjusted by a rotation-symmetrical body and also by asymmetrical shape such as an oval or rectangular shape.

### The number and arrangement of protrusions

A required number of protrusions is such a number that the protrusions are arranged with density to provide a space required for securing a target object at two or more points in the apparatus. When a compression effect is chosen over a tearing effect, the protrusions may be radially arranged to place a securing portion in the direction of the normal so that the securing portion move together with the end surface, thereby minimizing tension.

Generally, the radial arrangement provides irregularity to displace a position of the securing portion from the direction of the normal, thereby providing a larger tearing force.

For the density of the protrusions, a securing position space in a narrow space portion changes depending on whether the density is high in the outer peripheral portion or inside, and using this can adjust a size of the disassembled object obtained.

### Height of protrusion

The height of the protrusion cannot exceed a minimum space between the end surfaces. The height may be half or less of the minimum space, if possible, and this allows only a thick casing part to be torn off, and allows a circuit board inside to be taken out without being affected.

The height of the protrusion may be uniform, but the height of the inner peripheral portion may be increased to facilitate engagement of the casing and adapt to a product with a relatively small casing. Also, increasing the height of the outer peripheral portion deepens engagement immediately before separation to accommodate a stronger casing material. Random heights may accommodate a casing with a complex shape.

### Monitoring control device

This device is used for monitoring a shape or a size of a disassembled piece using a camera (Ca) that photographs around an end of the conveyor (H) from which the object to be disassembled is ejected outside. An image of the monitor camera (Ca) may be input to a computer (PC) to perform processing by a program described below.

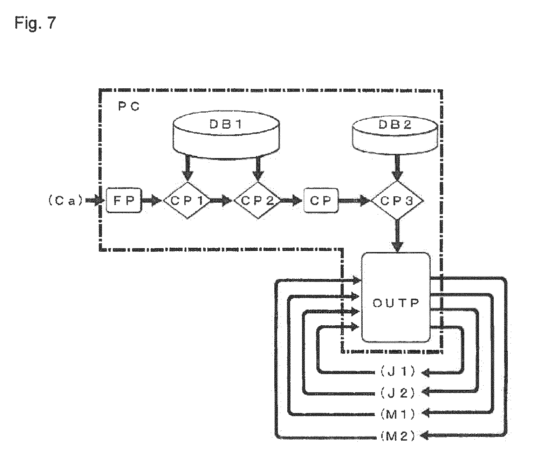

Figure 7 is a flowchart of a program operated in the computer.

DB1 stores the object to be disassembled, the inclination angles (θ1) and (θ2) of the rotors when the object is disassembled, a rotational speed, and an image of the disassembled piece, as one data, with these elements being changed. The image data is desirably processed so as to be easily digitally compared.

DB2 records a rotational speed adjustment program of each of the motors (M1) and (M2), and an adjustment program of each of the hydraulic jacks (J1) and (J2).

As such, an input from the camera (Ca) is subjected to processing like that for stored data in the DB1 by FP, and the processed image data is sent to PC1. The PC1 searches an image closest to the Ca processed image from the stored data in the DB1, and inclination angles (θ1) and (θ2) valves related thereto, a rotational speed, and object to be disassembled data are input to PC2. The PC2 searches best data of the object to be disassembled data from the DB1, and the best data and the current data are sent to the CP. The CP calculates a rotational difference between the motors and a difference between the jacks from both of the sent data, and sends the results to PC3.

The PC3 searches an adjustment program suitable for correcting the differences from the DB2, and sends the program to OUTP.

To the OUTP, signals indicating current states are always input from the drive motors (M1) and (M2) and the hydraulic jacks (J1) and (J2), and the states are controlled by the control program sent from the PC3 and automatically adjusted to best states.

Such automatic adjustment is performed at regular intervals, and thus automatic adjustment can be performed in the best state according to the input object to be disassembled.

### Prototype device

An example of a prototype device. The device has a disk diameter of 300 mm and a shaft angle of 4.2 degrees, and includes several protrusions of a semi-oval rotor shape placed on one side substantially equivalently. A space in a narrow portion is variable between 5 mm to 100 mm, and motor power is 90W and 30 rpm maximum.

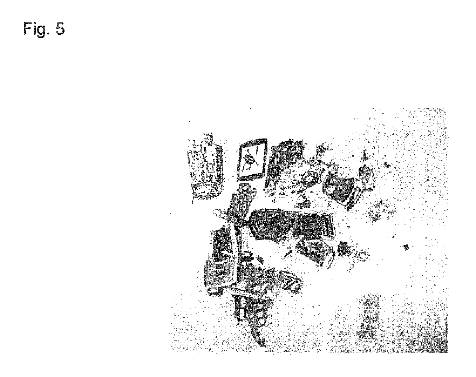

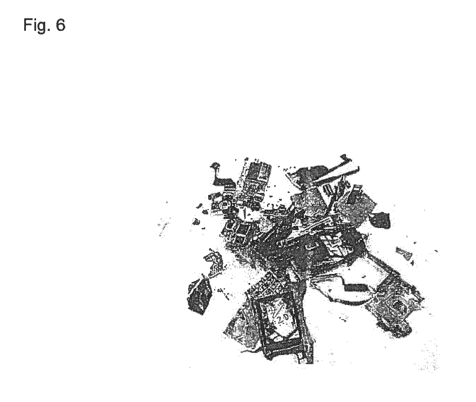

Figures 5 and 6 show a disassembled object using the device.

### Example of disassembling mobile phone

An example of disassembling a mobile phone using this device is shown. A rotational condition is 25 rpm and it takes substantially 13 seconds to perform the processing.

The casing part is torn off, and at this time, a portion with relatively high strength such as a screw forms a support to increase an effect of tearing. A circuit board can be removed from a casing and independently taken out. For casing materials, a metal part and a plastic part have different strength and thus are torn off as different parts, thereby facilitating succeeding separation.

### Example of more finely disassembling mobile phone

The device is operated by changing the condition so that the rotational condition is 25 rpm, a narrow portion space between rotary disks is 12 mm, and the number of protrusions is 34, thereby allowing finer disassembling of a circuit board part. This allows disassembling suitable for a case where a succeeding separation step is simplified to perform wind selection or the like and most of the object is inserted into a fusion furnace or the like.

### Embodiment 2

In this embodiment, a variant of Embodiment 1 will be exemplified.

The jacks (J1) and (J2) exemplified are hydraulic jacks that can be easily applied to the automatic control, but not limited to this, and a step motor type screw jack or the like may be similarly used.

The disks (R10) and (R20) do not always need to be a plate shape, and can be easily formed into a box shape or a cylindrical shape for rigidity reinforcement.

The protrusion is not limited to the shown shape. Even without the protrusion, disassembling can be sometimes performed depending on types of electronic devices.

Further, when limited similar electronic devices are disassembled, a proper rpm and inclination angle can be set by several tries, and the automatic control is not required in some cases.

### Citation List

### Patent Literature

Patent Literature 1: Japanese Patent No. 3022313
Patent Literature 2: Japanese Patent No. 3157682
Patent Literature 3: Japanese Patent No. 2696008
Patent Literature 4: Japanese Patent No. 0975569 (Japanese Patent Publication No. 54-5531)
Patent Literature 5: Japanese Patent Laid-Open No. 2007-319760

## Claims

1. A casing disassembling apparatus used for crushing a device including a semiconductor device comprising:
a first rotor and a second rotor journaled on a rotating shaft, and having end surfaces perpendicular to the rotating shaft,
wherein the end surfaces face each other, the rotors are placed so that the end surfaces are inclined to each other, a portion at which a space between the end surfaces is larger than at the other portion is an input port of an object to be disassembled, and the other portion is a portion at which a pressurizing force is applied to the input object to be disassembled, and from which a disassembled piece is ejected.

2. The casing disassembling apparatus according to claim 1, wherein a plurality of protrusions are mounted to at least one of the end surfaces.

3. The casing disassembling apparatus according to claim 2, wherein protrusions are provided on a periphery of one of the end surfaces at predetermined intervals corresponding to a size of the ejected disassembled piece.

4. A disassembling method using a casing disassembling apparatus according to any one of claims 1 to 3,
wherein a relative inclination angle and an inclination angle to the vertical of end surfaces are adjusted to set a space of an input port and a pressurizing force correspondingly to an object to be disassembled such as an electronic device.
